# EUROPEAN PATENT APPLICATION

(11) **EP 3 402 190 A1**
(43) Date of publication of application: **14.11.2018**
(21) Application number: 17305536.9
(22) Date of filing: 11.05.2017
(51) Int. Cl.: H04N 19/105, H04N 19/176, H04N 19/46, H04N 19/134, H04N 19/593, H04N 19/11

(54) **METHOD AND APPARATUS FOR INTRA PREDICTION IN VIDEO ENCODING AND DECODING**

(71) Applicant: Thomson Licensing, 92130 Issy-les-Moulineaux (FR)
(72) Inventor: RATH, Gagan Bihari, 35576 Cesson-Sévigné (FR); RACAPE, Fabien, 35576 Cesson-Sévigné (FR); POIRIER, Tangi, 35576 Cesson-Sévigné (FR); LELEANNEC, Fabrice, 35576 Cesson-Sévigné (FR)
(74) Representative: Huchet, Anne

(57) **Abstract**

In one implementation, the set of available intra prediction modes, from which an intra prediction mode for a current block can choose from, is determined based on the block configuration. For a block split horizontally, a top sub-block may choose directional prediction modes from directly horizontal to right diagonal, and a bottom sub-block may choose from up diagonal to directly horizontal. For a block split vertically, a left sub-block may choose directional prediction modes from left diagonal to directly vertical, and a right sub-block may choose from directly vertical to right diagonal. The choice of available intra prediction modes may also depend on the aspect ratio of the sub-block. Whether or not to use a reduced set of available intra prediction modes may also depend on the depth of the binary tree partition.

## Description

### TECHNICAL FIELD

The present embodiments generally relate to a method and an apparatus for video encoding and decoding, and more particularly, to a method and an apparatus for encoding and decoding intra prediction information.

### BACKGROUND

To achieve high compression efficiency, image and video coding schemes usually employ prediction and transform to leverage spatial and temporal redundancy in the video content. Generally, intra or inter prediction is used to exploit the intra or inter frame correlation, then the differences between the original image and the predicted image, often denoted as prediction errors or prediction residuals, are transformed, quantized and entropy coded. To reconstruct the video, the compressed data is decoded by inverse processes corresponding to the prediction, transform, quantization and entropy coding.

### SUMMARY

According to a general aspect of the present principles, a method for video decoding is presented, comprising: determining a first set of available intra prediction modes for a first sub-block of a block in a picture of said video; determining a second set of available intra prediction modes for a second sub-block of said block, wherein said first set of available intra prediction modes is different from said second set of available intra prediction modes; decoding a first intra prediction mode as one mode from said first set of available intra prediction modes for said first sub-block; decoding said first sub-block based on said decoded first intra prediction mode; decoding a second intra prediction mode as one mode from said second set of available intra prediction modes for said second sub-block; and decoding said second sub-block based on said decoded second intra prediction mode.

According to another general aspect of the present principles, a method for video encoding is presented, comprising: accessing a first sub-block and a second sub-block of a block of a picture in said video; determining a first set of available intra prediction modes for said first sub-block; determining a second set of available intra prediction modes for said second sub-block, wherein said first set of available intra prediction modes is different from said second set of available intra prediction modes; encoding said first sub-block using a first intra prediction mode selected from said first set of available intra prediction modes; and encoding said second sub-block using a second intra prediction mode selected from a second set of available intra prediction modes.

According to another general aspect of the present principles, an apparatus for video decoding is presented, comprising at least a memory and one or more processors, wherein the one or more processors are configured to: determine a first set of available intra prediction modes for a first sub-block of a block in a picture of said video; determine a second set of available intra prediction modes for a second sub-block of said block, wherein said first set of available intra prediction modes is different from said second set of available intra prediction modes; decode a first intra prediction mode as one mode from said first set of available intra prediction modes for said first sub-block; decode said first sub-block based on said decoded first intra prediction mode; decode a second intra prediction mode as one mode from said second set of available intra prediction modes for said second sub-block; and decode said second sub-block based on said decoded second intra prediction mode.

According to another general aspect of the present principles, an apparatus for video encoding, comprising at least a memory and one or more processors, wherein the one or more processors are configured to: access a first sub-block and a second sub-block of a block of a picture in said video; determine a first set of available intra prediction modes for said first sub-block; determine a second set of available intra prediction modes for said second sub-block, wherein said first set of available intra prediction modes is different from said second set of available intra prediction modes; encode said first sub-block using a first intra prediction mode selected from said first set of available intra prediction modes; and encode said second sub-block using a second intra prediction mode selected from a second set of available intra prediction modes.

During encoding or decoding, at least one of said first set of available intra prediction modes and said second set of available intra prediction modes may be determined based on whether said block is split into said first sub-block and second sub-block horizontally or vertically. Said first set of available intra prediction modes or said second set of available intra prediction modes may also be determined based on a height and width of said first sub-block or second sub-block, respectively.

In one embodiment, said first set of available intra prediction modes may include a first subset of intra prediction modes and a second subset of intra prediction modes, and said second set of available intra prediction modes may include said first subset of intra prediction modes and a third subset of intra prediction modes, wherein said third subset of intra prediction modes is different from said second subset of intra prediction modes. Said first subset of intra prediction modes may include at least one of DC and planar modes.

Said block may be split horizontally or vertically into said first sub-block and said second sub-block, and said first sub-block may have a same size and shape as said second sub-block. In one example, said first sub-block is an upper half of said block and said second sub-block is a bottom half of said block, wherein said second subset of intra prediction modes excludes directional intra prediction modes pointing upward, and wherein said third subset of intra prediction modes excludes directional intra prediction modes pointing downward. In another example, said first sub-block is a left half of said block and said second sub-block is a right half of said block, wherein said second subset of intra prediction modes excludes directional intra prediction modes pointing leftward, and wherein said third subset of intra prediction modes excludes directional intra prediction modes pointing rightward.

In addition to the manner of splitting and the width/height, the set of available intra prediction modes for a sub-block may also be determined based on a depth of binary tree partition associated with said first sub-block.

According to another general aspect of the present principles, a video signal is formatted to include: encoding of a first intra prediction mode selected from a first set of available intra prediction modes for a first sub-block of a block of a picture; encoding of a second intra prediction mode selected from a second set of available intra prediction modes for a second sub-block, wherein said first set of available intra prediction modes is different from said second set of available intra prediction modes; said first sub-block encoded using said first intra prediction mode; and said second sub-block encoded using said second intra prediction mode.

The present embodiments also provide a computer readable storage medium having stored thereon instructions for encoding or decoding video data according to the methods described above. The present embodiments also provide a computer readable storage medium having stored thereon a bitstream generated according to the methods described above. The present embodiments also provide a method and apparatus for transmitting the bitstream generated according to the methods described above.

### BRIEF DESCRIPTION OF THE DRAWINGS

FIG. 1 illustrates a block diagram of an exemplary HEVC (High Efficiency Video Coding) video encoder.
FIG. 2A is a pictorial example depicting the HEVC reference sample generation, and FIG. 2B is a pictorial example depicting intra prediction directions in HEVC.
FIG. 3 illustrates a block diagram of an exemplary HEVC video decoder.
FIG. 4 is a pictorial example depicting the binary tree splitting in JVET (Joint Video Exploration Team) of a square block.
FIG. 5 is a pictorial example depicting intra prediction directions in JEM (Joint Exploration Model) 3.0.
FIG. 6A and FIG. 6B are pictorial examples depicting the available directional intra prediction modes for two BT blocks from (1) a horizontal splitting and (2) a vertical splitting, respectively, according to an embodiment of the present principles.
FIG. 7 illustrates an exemplary method of encoding or decoding the intra prediction mode, according to an embodiment of the present principles.
FIG. 8 illustrates a block diagram of an exemplary system in which various aspects of the exemplary embodiments of the present principles may be implemented.

### DETAILED DESCRIPTION

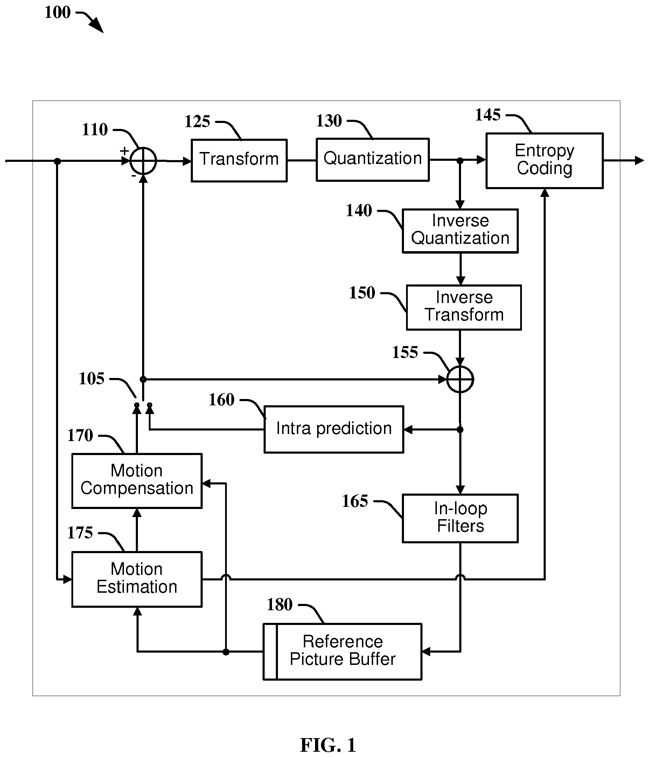

FIG. 1 illustrates an exemplary HEVC encoder 100. To encode a video sequence with one or more pictures, a picture is partitioned into one or more slices where each slice can include one or more slice segments. A slice segment is organized into coding units, prediction units and transform units.

In the present application, the terms "reconstructed" and "decoded" may be used interchangeably, and the terms "picture" and "frame" may be used interchangeably. Usually, but not necessarily, the term "reconstructed" is used at the encoder side while "decoded" is used at the decoder side.

The HEVC specification distinguishes between "blocks" and "units," where a "block" addresses a specific area in a sample array (e.g., luma, Y), and the "unit" includes the collocated blocks of all encoded color components (Y, Cb, Cr, or monochrome), syntax elements, and prediction data that are associated with the blocks (e.g., motion vectors).

For coding, a picture is partitioned into coding tree blocks (CTB) of square shape with a configurable size, and a consecutive set of coding tree blocks is grouped into a slice. A Coding Tree Unit (CTU) contains the CTBs of the encoded color components. A CTB is the root of a quadtree partitioning into Coding Blocks (CB), and a Coding Block may be partitioned into one or more Prediction Blocks (PB) and forms the root of a quadtree partitioning into Transform Blocks (TBs). Corresponding to the Coding Block, Prediction Block and Transform Block, a Coding Unit (CU) includes the Prediction Units (PUs) and the tree-structured set of Transform Units (TUs), a PU includes the prediction information for all color components, and a TU includes residual coding syntax structure for each color component. The size of a CB, PB and TB of the luma component applies to the corresponding CU, PU and TU. In the present application, the term "block" can be used to refer to any of CTU, CU, PU, TU, CB, PB and TB. In addition, the "block" can also be used to refer to a macroblock and a partition as specified in H.264/AVC or other video coding standards, and more generally to refer to an array of data of various sizes.

In the exemplary encoder 100, a picture is encoded by the encoder elements as described below. The picture to be encoded is processed in units of CUs. Each CU is encoded using either an intra or inter mode. When a CU is encoded in an intra mode, it performs intra prediction (160). In an inter mode, motion estimation (175) and compensation (170) are performed. The encoder decides (105) which one of the intra mode or inter mode to use for encoding the CU, and indicates the intra/inter decision by a prediction mode flag. Prediction residuals are calculated by subtracting (110) the predicted block from the original image block.

In order to exploit the spatial redundancy, CUs in intra mode are predicted from reconstructed neighboring samples within the same slice. The causal neighboring CUs have already been encoded/decoded when the encoding/decoding of the current CU is considered. To avoid mismatch, the encoder and the decoder have the same prediction. Therefore, both the encoder and the decoder use the information from the reconstructed/decoded neighboring causal CUs to form prediction for the current CU.

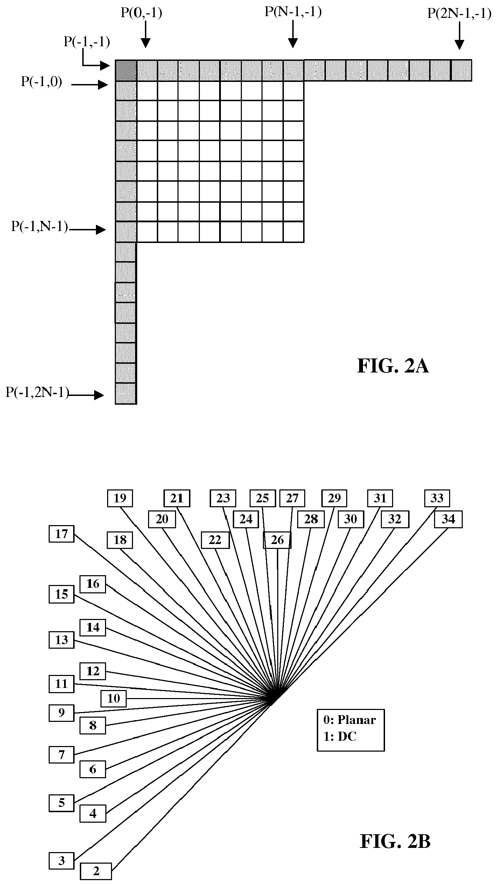

The intra prediction process in HEVC includes three steps: (1) reference sample generation, (2) intra sample prediction and (3) post-processing of predicted samples. Exemplary HEVC reference samples are illustrated in FIG. 2A, where the pixel value at coordinate (x, y), with respect to the above-left corner of the current block, is indicated by P(x,y). For a CU of size NxN, a row of 2N decoded samples on the top is formed from the decoded CUs. Similarly, a column of 2N samples on the left is formed from the decoded CUs. The corner pixel from the above-left decoded CU is used to fill up the gap between the above row and the left column references. If some of the samples are not available, for example, when the corresponding CUs is not in the same slice or the current CU is at a frame boundary, then reference sample substitution is performed where the missing samples are copied from the available samples in a clock-wise direction. Then, depending on the current CU size and the prediction mode, the reference samples are filtered using a specified filter.

The next step, i.e., the intra sample prediction, consists of predicting the pixels of the target CU based on the reference samples. In order to predict different kinds of content efficiently, HEVC supports a range of prediction methods. In particular, planar and DC prediction modes are used to predict smooth and gradually changing regions, whereas directional prediction modes are used to capture different directional structures. HEVC supports 33 directional prediction modes which are indexed from 2 to 34. These prediction modes correspond to different prediction directions as illustrated in FIG. 2B, wherein the numbers denote intra prediction mode indices. Some of the prediction modes such as the DC mode and directly horizontal (i.e., mode 10) and directly vertical modes (i.e., mode 26) may cause discontinuity at the CU boundaries of the prediction samples. Therefore, such prediction modes are followed by a post-processing step where the boundary of the predicted samples are smoothed using a low-pass filter. Here, directly horizontal mode refers to the prediction mode when the reference samples on the left side of a target block are repeated horizontally to the right for intra prediction. Similarly, directly vertical mode refers to the prediction mode when the reference samples on the top of a target block are repeated vertically down for intra prediction.

Since there are multiple intra prediction modes available, the decoder needs the mode information to form the prediction for an intra-coded CU. The encoder encodes the mode information using a most probable mode (MPM) set for the luma component. HEVC specifies an MPM set consisting of three distinct modes, which is constructed from the prediction modes of the intra coded CUs on the top and left of the current CU, the planar mode, the DC mode, and the directly vertical mode.

Specifically, HEVC considers three most probable modes, MPM0, MPM1 and MPM2, when coding the luma intra prediction mode predictively, as shown in Table 1, where "L" represents the intra prediction mode of the neighboring left block and "A" represents the intra prediction mode of the neighboring above block. The neighboring blocks may have different sizes than the current block. Among the three most probable modes, the first two are initialized by the luma intra prediction modes of the above and left PBs if those PBs are available and are coded using an intra prediction mode. Any unavailable intra prediction mode is considered to be the DC mode.

**TABLE 1**

| **Conditions** | | | **MPM0** | **MPM1** | **MPM2** |
|---|---|---|---|---|---|
| L=A | L ≠ Planar and L ≠ DC | | L | L-1 | L+1 |
| | Otherwise | | Planar | DC | 26 (Vertical) |
| L≠A | L ≠ Planar and A ≠ Planar | | L | A | Planar |
| | otherwise | L ≠ DC and A ≠ DC | L | A | DC |
| | | otherwise | L | A | 26 (Vertical) |

When the first two most probable modes are not equal, the first most probable mode (MPM0) is set to L, the second most probable mode (MPM1) is set to A, and the third most probable mode (MPM2) is set equal to the planar mode, DC, or vertical, according to which of these modes, in this order, is not a duplicate of one of the first two modes. When the first two most probable modes are the same, if this first mode has the value planar or DC, the three most probable modes are assigned as planar, DC and vertical, in that order. When the first two most probable modes are the same and the first mode is a directional prediction mode, the second and third most probable modes are chosen as the two adjacent directional prediction modes of the first MPM.

The applicable luma intra prediction mode for the current block can be coded using two different options. If the prediction mode of the current block is included in the constructed list of three most probable modes, the mode is signaled by an index of the mode in the MPM set using variable length coding. Specifically, a single-bit flag prev_intra_luma_pred_flag is set to 1 to indicate that the prediction mode of the current block is equal to one of these three MPM modes, where index 0 is signaled with bit '0' for MPM0, index 1 is signaled with bits '10' for MPM1, and index 2 is signaled with bits '11' for MPM2. If the prediction mode is not equal to any mode in the MPM set, then the flag prev_intra_luma_pred_flag is set to 0 and the index of the current luma prediction mode excluding the three MPMs is indicated using a 5-bit fixed length code (FLC). For the chroma components, the prediction mode is signaled as the same mode for the luma (called derived mode) by using one bit, or one of the four modes (planar, DC, directly vertical, directly horizontal) using three bits. If any of these four modes equals the derived mode, then it is replaced by mode 34 with the same three-bit signaling as originally assigned.

For an inter CU, the corresponding coding block is further partitioned into one or more prediction blocks. Inter prediction is performed on the PB level, and the corresponding PU contains the information about how inter prediction is performed. The motion information (i.e., motion vector and reference picture index) can be signaled in two methods, namely, "merge mode" and "advanced motion vector prediction (AMVP)".

In the merge mode, a video encoder or decoder assembles a candidate list based on already coded blocks, and the video encoder signals an index for one of the candidates in the candidate list. At the decoder side, the motion vector (MV) and the reference picture index are reconstructed based on the signaled candidate.

In AMVP, a video encoder or decoder assembles candidate lists based on motion vectors determined from already coded blocks. The video encoder then signals an index in the candidate list to identify a motion vector predictor (MVP) and signals a motion vector difference (MVD). At the decoder side, the motion vector (MV) is reconstructed as MVP+MVD. The applicable reference picture index is also explicitly coded in the PU syntax for AMVP.

The prediction residuals are then transformed (125) and quantized (130). The quantized transform coefficients, as well as motion vectors and other syntax elements, are entropy coded (145) to output a bitstream. The encoder may also skip the transform and apply quantization directly to the non-transformed residual signal on a 4x4 TU basis. The encoder may also bypass both transform and quantization, i.e., the residual is coded directly without the application of the transform or quantization process. In direct PCM coding, no prediction is applied and the coding unit samples are directly coded into the bitstream.

The encoder decodes an encoded block to provide a reference for further predictions. The quantized transform coefficients are de-quantized (140) and inverse transformed (150) to decode prediction residuals. Combining (155) the decoded prediction residuals and the predicted block, an image block is reconstructed. In-loop filters (165) are applied to the reconstructed picture, for example, to perform deblocking/SAO (Sample Adaptive Offset) filtering to reduce encoding artifacts. The filtered image is stored at a reference picture buffer (180).

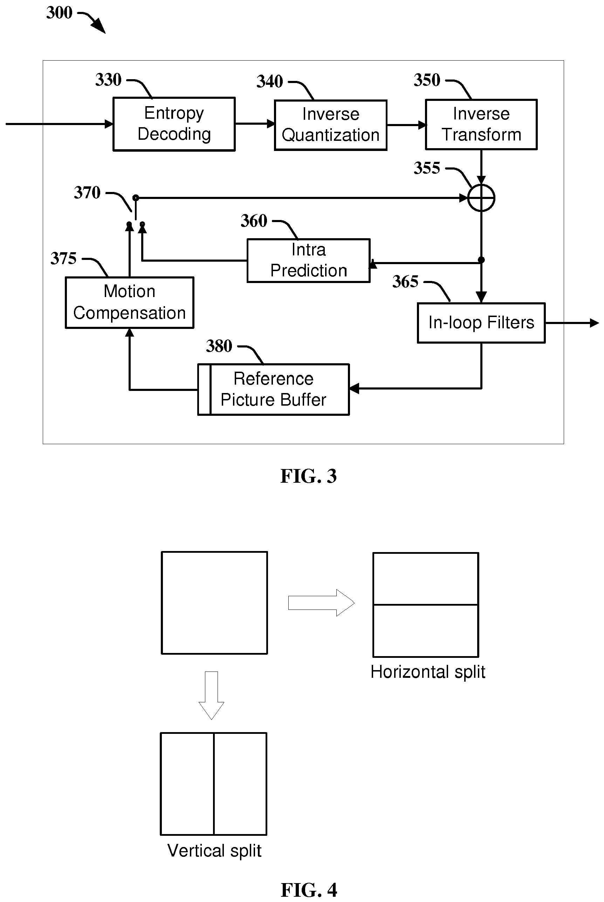

FIG. 3 illustrates a block diagram of an exemplary HEVC video decoder 300. In the exemplary decoder 300, a bitstream is decoded by the decoder elements as described below. Video decoder 300 generally performs a decoding pass reciprocal to the encoding pass as described in FIG. 1, which performs video decoding as part of encoding video data.

In particular, the input of the decoder includes a video bitstream, which may be generated by video encoder 100. The bitstream is first entropy decoded (330) to obtain transform coefficients, motion vectors, and other coded information. The transform coefficients are de-quantized (340) and inverse transformed (350) to decode the prediction residuals. Combining (355) the decoded prediction residuals and the predicted block, an image block is reconstructed. The predicted block may be obtained (370) from intra prediction (360) or motion-compensated prediction (i.e., inter prediction) (375). As described above, AMVP and merge mode techniques may be used to derive motion vectors for motion compensation, which may use interpolation filters to calculate interpolated values for sub-integer samples of a reference block. In-loop filters (365) are applied to the reconstructed image. The filtered image is stored at a reference picture buffer (380).

As described above, in HEVC, encoding of a frame of video sequence is based on a block structure. A frame is divided into square coding tree units (CTUs), which may undergo quadtree (QT) splitting to multiple coding units based on rate-distortion criteria. Each CU is either intra-predicted, that is spatially predicted from the causal neighbor CUs, or inter-predicted, that is, temporally predicted from reference frames already decoded. In I-slices all CUs are intra-predicted, whereas in P and B slices the CUs can be either intra or inter-predicted. For intra prediction, HEVC defines 35 prediction modes which include one planar mode (indexed as mode 0), one DC mode (indexed as mode 1) and 33 directional modes (indexed as modes 2 - 34).

In JEM (Joint Exploration Model) under study by the Joint Video Exploration Team (JVET) for designing the next generation video compression standard, the QTBT (Quadtree plus Binary Tree) structure removes the concept of multiple partition types in HEVC, i.e., removes the separation of CU, PU and TU concepts.

A Coding Tree Unit (CTU) is firstly partitioned by a quadtree structure. The quadtree leaf nodes are further partitioned by a binary tree structure. The binary tree leaf node is named as Coding Units (CUs), which is used for prediction and transform without further partitioning. Thus, the CU, PU and TU have the same block size in the new coding QTBT block structure. In JEM, a CU consists of Coding Blocks (CBs) of different color components. For ease of notation, the CUs or blocks resulting from a binary tree partition are also referred to as binary tree (BT) CUs or blocks, and the CUs or blocks resulting from a quadtree partition are also referred to as quadtree (QT) CUs or blocks.

If a CU results from a quadtree splitting of a block, the CU is of square shape. If a CU results from a binary tree splitting of a block, the CU can be either square or rectangular depending on the shape of the parent block and the type of splitting. In a binary tree, a block can be split either horizontally, or vertically, as exemplified in FIG. 4. The splitting is done symmetrically resulting in two identical sub-blocks. In a horizontal splitting, the resulting top and bottom sub-blocks have the same width as the parent block but their heights are half of that of the parent block; and in a vertical splitting, the resulting left and right sub-blocks have the same height as the parent block but their widths are half of that of the parent block. If the parent block is of square shape, then the resulting sub-blocks are rectangular. If the parent block is rectangular, the resulting sub-blocks can be either rectangular or square.

Depending on the depth configuration of the binary tree, the two resulting CUs can be further split either horizontally or vertically. The final BT structure can be decided by the rate-distortion (RD) cost measure. The splitting structure in a BT is encoded using two bits where the first bit indicates whether a CU is split or not and the second bit indicates the orientation of the split (vertical or horizontal). Using these bits the decoder can go through the tree to arrive at the final CUs. In JEM 3.0, the binary tree is developed only after the quadtree reaches a certain depth. In other words, each CTU goes through a quadtree split structure until a certain depth, then either a quadtree or a BT structure can be followed. A quadtree CU, after a certain CU depth, can be split into either four quadtree CUs or two BT CUs. A BT CU can only be split into two BT CUs.

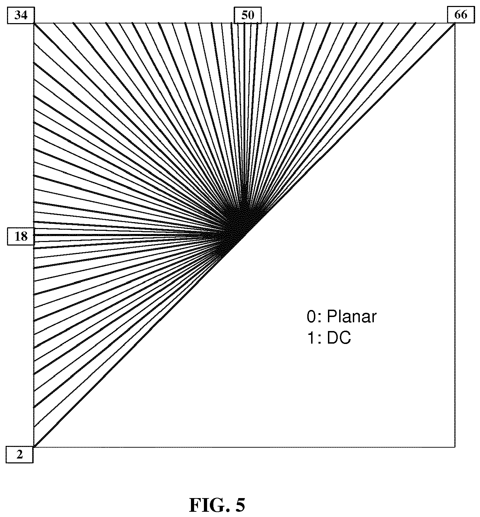

As possible improvements to HEVC, JEM 3.0 uses 65 directional intra prediction modes in addition to the planar and DC modes. The 65 directional prediction modes include the 33 directional modes specified in HEVC plus 32 additional directional modes that correspond to angles in-between two original angles, as illustrated in FIG. 5. The number of prediction modes was increased to adapt to the increased CTU block size, currently set to 128×128 pixels. With a QTBT structure, the basic prediction is similarly performed as done in HEVC irrespective of the CU size, but with added tools such as Reference Sample Adaptive Filtering (RSAF) and Position Dependent Intra Prediction Combination (PDPC).

In a QTBT structure, the CUs can be rectangular with one of the sides being much larger than the other. The QTBT structure increases the complexity of the encoder over the existing quadtree structure. The augmentation of the number of prediction modes further increases the complexity at the encoder since the encoder usually searches through more candidate prediction modes. Giving equal preferences to all prediction modes in case of BT blocks may also be statistically redundant since better coding schemes may be designed that suit the BT configurations.

The present embodiments are directed to encoding and decoding intra prediction modes. Generally, we consider BT dependent intra prediction, in order to reduce computational complexity and improve the compression efficiency. In the following, we use the intra prediction mode coding in JEM 3.0 as the exemplary basis for various modifications to intra coding. However, the present principles can be applied to other video codecs.

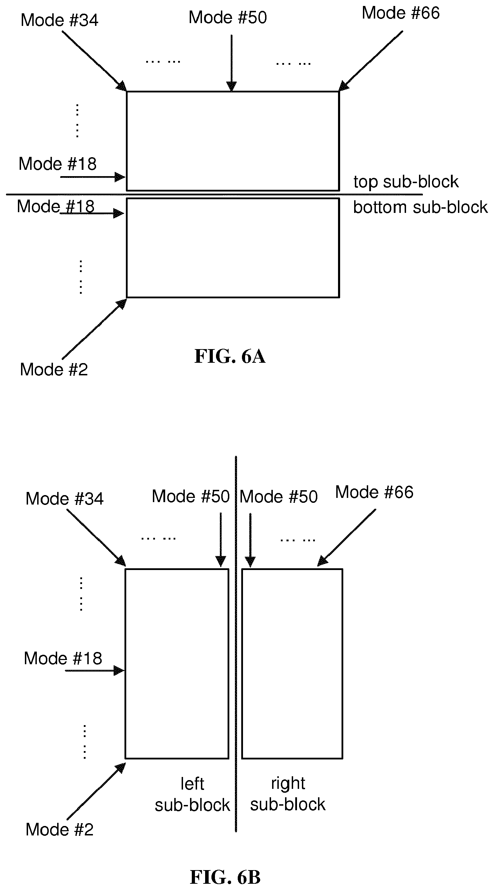

Now consider a CU which is to be split horizontally as shown in FIG. 6A. If we assume that the content of the two CUs belongs to two different objects, or one object with the background justifying the split, then we can assume that the two CUs are likely to have different prediction modes. If the two CUs belong to the same object or background, then it is more likely to have no split or a quadtree split. Therefore, in the case of a horizontal BT split we can partition the set of prediction modes as shown in FIG. 6A. The top sub-block can have a directional prediction mode from directly horizontal (mode 18) to right diagonal (mode 66), and the bottom sub-block can have a directional prediction mode from up-diagonal (mode 2) to directly horizontal. Both the top and bottom sub-blocks can also have planar and DC modes in addition to the directional modes.

In an analogous manner, in the case of vertical split, we can partition the prediction modes between the left sub-block and the right sub-block as shown in FIG. 6B. The left sub-block can have a directional prediction mode from up-diagonal (mode 2) to directly vertical (mode 50), and the right sub-block can have a directional prediction mode from directly vertical to right diagonal (mode 66). Both the left and right sub-blocks can also have planar and DC modes in addition to the directional modes.

Thus, depending on the BT block configurations, we may choose an intra prediction mode for the current block from a subset of the 67 intra prediction modes. Non-limiting examples of the BT block configurations include the shape, the splitting from which the BT block result, whether the BT block is a top, bottom, left or right sub-block of a splitting.

The subset of the intra prediction modes for a block is also referred to as "a set of available intra prediction modes," "available intra prediction modes" or "possible intra prediction modes." During encoding or decoding of the block, the actual intra prediction mode used to encode or decode the block is chosen only from the set of available prediction modes. At the encoder side, depending on the BT block configurations, the encoder can now search through fewer prediction modes to arrive at the optimal mode, thus leading to less complexity. At the decoder side, depending on the BT block configurations, the decoder can know the possible intra prediction modes for a BT block and can decode the signaling of the mode accordingly.

In the JEM 3.0 implementation, the MPM set contains 6 distinct modes constructed from the prediction modes of five neighbor CUs of the current CU. Since the total number of prediction modes is 67, the set of remaining modes consists of 61 modes. The set of remaining modes is divided into a selected set of 16 modes which are uniformly spaced over the indices [0-60], and the remaining 45 modes. If the prediction mode of the current block is equal to one of the modes in the MPM set, the encoder enables a flag and encode the index of the MPM mode by a variable length code. Otherwise the flag is disabled and the encoder checks if the mode belongs to the set of the selected 16 modes. If so, the encoder enables a set selection flag and encodes the selected mode using a 4-bit FLC code. Otherwise, the mode is from the remaining 45 modes and is encoded using a truncated binary code.

To accommodate the changes in available intra prediction modes, in one embodiment, we encode the intra prediction mode depending on the BT block configuration. Since we restrict the available intra prediction modes to only a certain set, the encoding depends on the set corresponding to the block configuration.

In one embodiment, as described above, for the horizontal split, the bottom block can have the following prediction modes: planar, DC and the directional modes indexed from 2 to 18 (directly horizontal). In this case, we can restrict the MPM set to 3 modes and encode the remaining 16 modes using a 4-bit FLC. If the intra prediction mode belongs to the MPM set, the mode can be encoded as in HEVC, i.e., using a variable length code.

For the top block, the possible prediction modes can be planar, DC and the directional prediction modes from 18 (directly horizontal) to 66 (right diagonal). In this case, we also restrict the MPM set to three modes. The remaining 48 modes are divided into two sets, one consisting of 16 modes and the other consisting of 32 modes. Depending on the set the actual intra prediction mode belongs to, we use either a 4-bit FLC or a 5-bit FLC to encode the intra prediction mode.

For two BT blocks obtained with a vertical split, we may proceed similarly. For the left block, the possible prediction modes can be: planar, DC, and the directional modes from 2 to 50 (directly vertical). In this case, we make an MPM set of three modes and encode the remaining 48 modes by dividing them into two sets, one with 16 modes and the other with 32 modes. We follow similar fixed length coding as we do for the top block in a horizontal splitting. For the right block, the possible intra prediction modes can be planar, DC, and the directional modes from 50 (directly vertical) to 66 (right diagonal). In this case, we can also make an MPM set of three modes and the remaining 16 modes are encoded with a 4-bit FLC code.

For the construction of the MPM set, we can use only the neighbor causal CUs whose prediction modes satisfy a mode constraint, for example, use only the modes falling into the set of available intra prediction modes for the target CU. It should be noted that the MPM set selection and the encoding of the mode are independent of the proposed prediction modes splitting. In various embodiments, the modifications of the set of available intra prediction modes, the construction of MPM set, and the encoding of the selected intra prediction mode can be implemented separately or in combination.

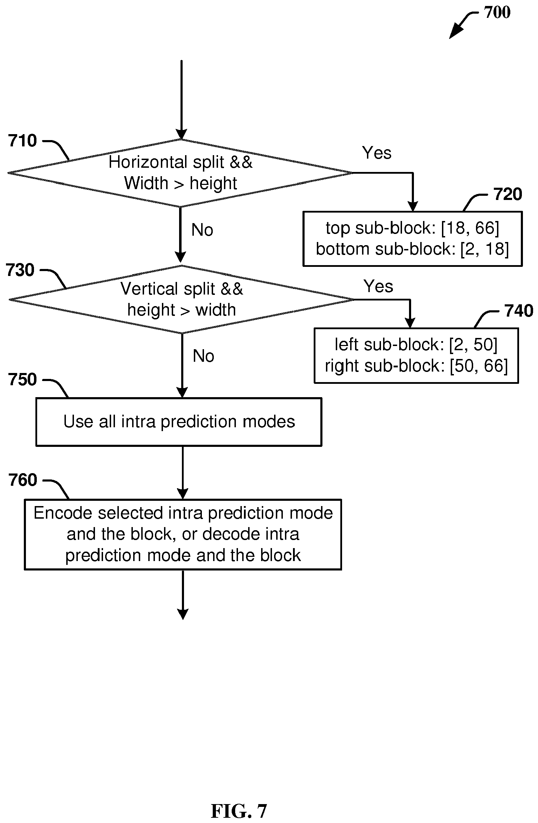

FIG. 7 illustrates an exemplary method 700 for encoding or decoding the intra prediction mode for a current block, according to an embodiment of the present principles. Method 700 can be implemented at the encoder and decoder. Generally, the same set of available intra prediction modes should be used at both the encoder and decoder such that a bitstream generated by the encoder can be properly decoded by the decoder.

In this embodiment, we apply the BT dependent intra prediction only to the BT blocks that have certain aspect ratios corresponding to the split. For the horizontal split, we only choose the BT blocks whose widths are larger than heights, and for the vertical split, we only choose the BT blocks whose heights are larger than widths, for a reduced set of available intra prediction modes. For square blocks resulting from BT splits, or for rectangular blocks not in the above category, all 67 prediction modes are considered.

Specifically, in method 700, an encoder or decoder checks (710) whether a block results from a horizontal split and whether the width of the block is larger than the height of the block. If yes, the encoder or decoder checks if the block is a top sub-block or a bottom sub-block from the horizontal split. For a top sub-block, the set of available directional prediction modes is set (720) to modes from 18 (directly horizontal) to 66 (right diagonal). For a bottom sub-block, the set of available directional prediction modes is set (720) to modes from 2 to 18. In addition to the directional prediction modes, the set of available prediction modes may further include one or more non-directional modes, such as planar and DC modes.

If the condition at 710 is not satisfied, the encoder or decoder checks (730) whether the block results from a vertical split and whether the height of the block is larger than the width of the block. If yes, the encoder or decoder checks if the block is a left sub-block or a right sub-block from the vertical split. For a left sub-block, the set of available directional prediction modes is set (740) to modes from 2 to 50 (directly vertical). For a right sub-block, the set of available directional prediction modes is set (740) to modes from 50 (directly vertical) to 66. In addition to the directional prediction modes, the set of available prediction modes may further include one or more non-directional modes, such as planar and DC modes.

If the condition at 730 is not satisfied either, then all 67 intra prediction modes are used (750) as available intra prediction modes. At the encoder side, the actual intra prediction mode is only to be selected from the set of available prediction modes. The same set of available intra prediction modes is known to the decoder side, for example, based on the aspect ratio of the block and whether the block is from a horizontal or vertical splitting. Because the number of available intra prediction modes is smaller than that of JEM 3.0, the complexity of intra prediction can be reduced at the encoder side, and the number of bits needed to indicate the selected intra prediction mode usually becomes smaller.

To encode or decode (760) the selected intra prediction mode for the current block, when there are 17 available directional modes (e.g., right or bottom sub-block), we restrict the MPM set to 3 modes. For the construction of the MPM set, we can use only the neighbor causal CUs whose prediction modes satisfy the mode constraint for the current CU. If the selected intra prediction mode belongs to the MPM set, the mode can be encoded or decoded as in HEVC, i.e., using a variable length code. Otherwise, if the selected intra prediction mode belongs to the remaining modes, the mode can be encoded or decoded using a 4-bit FLC.

When there are 49 available directional modes (e.g., left or top sub-block), we can also restrict the MPM set to three modes. For the construction of the MPM set, we use only the neighbor causal CUs whose prediction modes satisfy the mode constraint for the target CU. The remaining modes are divided into two sets, one consisting of 16 modes and the other consisting of other modes. Depending on the set the prediction mode belongs to, we use either a 4-bit FLC or a 5-bit FLC to encode or decode the intra prediction mode. Based on the decoded intra prediction mode, the current block can be decoded.

It should be noted that according to the present embodiments, both the encoder and the decoder derive the proposed reduced set of available intra prediction modes, based on the block's configuration, and no explicit signaling is needed to indicate the available intra prediction modes.

In different implementations, method 700 can be adjusted. For example, the condition at 710 may be changed to whether the block results from a horizontal split and whether the height of the block is larger than the width of the block, and the condition at 730 may be changed to whether the block results from a vertical split and whether the width of the block is larger than the height of the block.

In another example, we may apply the BT dependent intra prediction to all binary tree block configurations irrespective of their aspect ratio. That is, we apply the proposed intra prediction depending on the split type, but not on the aspect ratio. Referring back to FIG. 7, the condition at 710 may be changed to whether the block results from a horizontal split, and the condition at 730 may be changed to whether the block results from a vertical split.

In another example, we may further limit the number of available intra prediction modes. For the top block, we maintain the horizontal directions (mode 18 to 33) but subsample the modes from 34 to 66 by a factor of two. Similarly, for the left block, we maintain the vertical directions from 34 to 50 but subsample the modes from 2 to 33 by a factor of two. This makes the total number of modes available for top block or left block 32 instead of 48 which can be encoded by a 5-bit FLC.

In another example, the set of MPM is constructed according to the BT block configuration. It should be noted that the method of constructing the MPM set can be used in combination with different implementations of choosing the set the available intra prediction modes. Here, the MPM set can be constructed to have six prediction modes as JEM 3.0. But the order of the modes is set according to the BT block configuration. For the horizontal split, the first three modes in the MPM set are preset as planar, DC and horizontal (18) and the remaining three are constructed from the five neighbors depending on their availability. For a vertical split, the first three modes in the MPM set are preset as planar, DC and vertical (50) and the remaining three are constructed from the five neighbor blocks depending on their availability.

In another embodiment, we may further consider the binary tree depth. For example, we may only adjust the set of available intra prediction modes or MPM set construction when the binary tree depth is beyond a threshold, for example, BT depth of 2.

In the above, various embodiments are described with respect to the symmetric BT splitting. That is, when the sub-blocks are obtained by splitting in the middle, either horizontally or vertically. However, the present principles can also be applied in other types of splitting, for example, but not limited to, when the splitting is asymmetric, that is, splitting them horizontally with different heights, or vertically with different widths, when the partitions are directional, or when the partition is not mutually exclusive.

Various methods are described above, and each of the methods comprises one or more steps or actions for achieving the described method. Unless a specific order of steps or actions is required for proper operation of the method, the order and/or use of specific steps and/or actions may be modified or combined.

Various numeric values are used in the present application, for example, the number of MPMs in the MPM set, three or six. It should be noted that the specific values are for exemplary purposes and the present principles are not limited to these specific values.

In the above, various embodiments are described with respect to JVET based on the HEVC standard. For example, various methods of choosing available intra prediction modes as described above can be used to modify the intra prediction module (160, 360) of the JVET or HEVC encoder and decoder as shown in FIG. 1 and FIG. 3. However, the present principles are not limited to JVET or HEVC, and can be applied to other standards, recommendations, and extensions thereof.

For example, general to different video compression standards, a top sub-block from a horizontal splitting may choose the intra prediction mode from a set of available intra prediction modes that exclude directional prediction modes pointing upward, a bottom sub-block may choose the intra prediction mode from a set of available intra prediction modes that exclude directional prediction modes pointing downward, a left sub-block from a vertical splitting may choose the intra prediction mode from a set of available intra prediction modes that exclude directional prediction modes pointing leftward, and a right sub-block may choose the intra prediction mode from a set of available intra prediction modes that exclude directional prediction modes pointing rightward. The reason for excluding the modes is based on the intuition that a sub-block would otherwise use samples from the other sub-block for prediction, which is not the aim of partitioning them into sub-blocks.

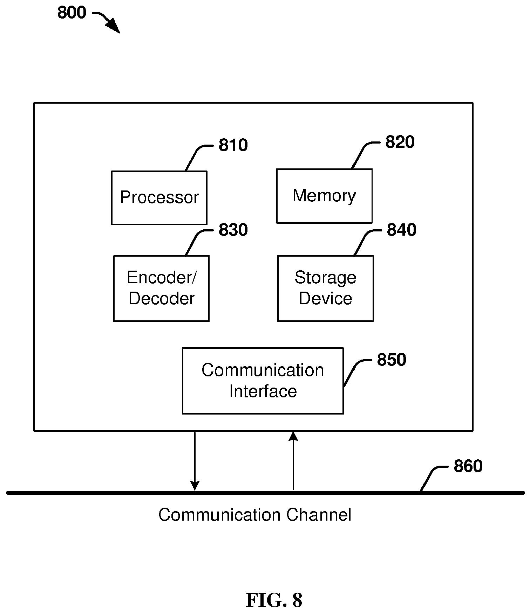

FIG. 8 illustrates a block diagram of an exemplary system in which various aspects of the exemplary embodiments of the present principles may be implemented. System 800 may be embodied as a device including the various components described below and is configured to perform the processes described above. Examples of such devices, include, but are not limited to, personal computers, laptop computers, smartphones, tablet computers, digital multimedia set top boxes, digital television receivers, personal video recording systems, connected home appliances, and servers. System 800 may be communicatively coupled to other similar systems, and to a display via a communication channel as shown in FIG. 8 and as known by those skilled in the art to implement the exemplary video system described above.

The system 800 may include at least one processor 810 configured to execute instructions loaded therein for implementing the various processes as discussed above. Processor 810 may include embedded memory, input output interface and various other circuitries as known in the art. The system 800 may also include at least one memory 820 (e.g., a volatile memory device, a non-volatile memory device). System 800 may additionally include a storage device 820, which may include non-volatile memory, including, but not limited to, EEPROM, ROM, PROM, RAM, DRAM, SRAM, flash, magnetic disk drive, and/or optical disk drive. The storage device 840 may comprise an internal storage device, an attached storage device and/or a network accessible storage device, as non-limiting examples. System 800 may also include an encoder/decoder module 830 configured to process data to provide an encoded video or decoded video.

Encoder/decoder module 830 represents the module(s) that may be included in a device to perform the encoding and/or decoding functions. As is known, a device may include one or both of the encoding and decoding modules. Additionally, encoder/decoder module 830 may be implemented as a separate element of system 800 or may be incorporated within processors 810 as a combination of hardware and software as known to those skilled in the art.

Program code to be loaded onto processors 810 to perform the various processes described hereinabove may be stored in storage device 840 and subsequently loaded onto memory 820 for execution by processors 810. In accordance with the exemplary embodiments of the present principles, one or more of the processor(s) 810, memory 820, storage device 840 and encoder/decoder module 830 may store one or more of the various items during the performance of the processes discussed herein above, including, but not limited to the input video, the decoded video, the bitstream, equations, formula, matrices, variables, operations, and operational logic.

The system 800 may also include communication interface 850 that enables communication with other devices via communication channel 860. The communication interface 850 may include, but is not limited to a transceiver configured to transmit and receive data from communication channel 860. The communication interface may include, but is not limited to, a modem or network card and the communication channel may be implemented within a wired and/or wireless medium. The various components of system 800 may be connected or communicatively coupled together using various suitable connections, including, but not limited to internal buses, wires, and printed circuit boards.

The exemplary embodiments according to the present principles may be carried out by computer software implemented by the processor 810 or by hardware, or by a combination of hardware and software. As a non-limiting example, the exemplary embodiments according to the present principles may be implemented by one or more integrated circuits. The memory 820 may be of any type appropriate to the technical environment and may be implemented using any appropriate data storage technology, such as optical memory devices, magnetic memory devices, semiconductor-based memory devices, fixed memory and removable memory, as non-limiting examples. The processor 810 may be of any type appropriate to the technical environment, and may encompass one or more of microprocessors, general purpose computers, special purpose computers and processors based on a multi-core architecture, as non-limiting examples.

The implementations described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation" of the present principles, as well as other variations thereof, mean that a particular feature, structure, characteristic, and so forth described in connection with the embodiment is included in at least one embodiment of the present principles. Thus, the appearances of the phrase "in one embodiment" or "in an embodiment" or "in one implementation" or "in an implementation", as well any other variations, appearing in various places throughout the specification are not necessarily all referring to the same embodiment.

Additionally, this application or its claims may refer to "determining" various pieces of information. Determining the information may include one or more of, for example, estimating the information, calculating the information, predicting the information, or retrieving the information from memory.

Further, this application or its claims may refer to "accessing" various pieces of information. Accessing the information may include one or more of, for example, receiving the information, retrieving the information (for example, from memory), storing the information, processing the information, transmitting the information, moving the information, copying the information, erasing the information, calculating the information, determining the information, predicting the information, or estimating the information.

Additionally, this application or its claims may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

## Claims

1. A method for decoding a video, comprising:
determining (720, 740) a first set of available intra prediction modes for a first sub-block of a block in a picture of said video;
determining (720, 740) a second set of available intra prediction modes for a second sub-block of said block, wherein said first set of available intra prediction modes is different from said second set of available intra prediction modes;
decoding (760) a first intra prediction mode as one mode from said first set of available intra prediction modes for said first sub-block;
decoding (760) said first sub-block based on said decoded first intra prediction mode;
decoding (760) a second intra prediction mode as one mode from said second set of available intra prediction modes for said second sub-block; and
decoding (760) said second sub-block based on said decoded second intra prediction mode.

2. A method for encoding a video, comprising:
accessing a first sub-block and a second sub-block of a block of a picture in said video;
determining (720, 740) a first set of available intra prediction modes for said first sub-block;
determining (720, 740) a second set of available intra prediction modes for said second sub-block, wherein said first set of available intra prediction modes is different from said second set of available intra prediction modes;
encoding (760) said first sub-block using a first intra prediction mode selected from said first set of available intra prediction modes; and
encoding (760) said second sub-block using a second intra prediction mode selected from a second set of available intra prediction modes.

3. An apparatus (800) for decoding a video, comprising at least a memory and one or more processors, wherein the one or more processors are configured to:
determine a first set of available intra prediction modes for a first sub-block of a block in a picture of said video;
determine a second set of available intra prediction modes for a second sub-block of said block, wherein said first set of available intra prediction modes is different from said second set of available intra prediction modes;
decode a first intra prediction mode as one mode from said first set of available intra prediction modes for said first sub-block;
decode said first sub-block based on said decoded first intra prediction mode;
decode a second intra prediction mode as one mode from said second set of available intra prediction modes for said second sub-block; and
decode said second sub-block based on said decoded second intra prediction mode.

4. An apparatus (800) for encoding a video, comprising at least a memory and one or more processors, wherein the one or more processors are configured to:
access a first sub-block and a second sub-block of a block of a picture in said video;
determine a first set of available intra prediction modes for said first sub-block;
determine a second set of available intra prediction modes for said second sub-block, wherein said first set of available intra prediction modes is different from said second set of available intra prediction modes;
encode said first sub-block using a first intra prediction mode selected from said first set of available intra prediction modes; and
encode said second sub-block using a second intra prediction mode selected from a second set of available intra prediction modes.

5. The method of claim 1 or 2, or the apparatus of claim 3 or 4, wherein at least one of said first set of available intra prediction modes and said second set of available intra prediction modes is determined based on whether said block is split into said first sub-block and second sub-block horizontally or vertically.

6. The method of any one of claims 1, 2 and 5, or the apparatus of any one of claims 3-5, wherein said first set of available intra prediction modes is determined based on a height and width of said first sub-block.

7. The method of any one of claims 1, 2, 5 and 6, or the apparatus of any one of claims 3-6, said first set of available intra prediction modes including a first subset of intra prediction modes and a second subset of intra prediction modes, said second set of available intra prediction modes including said first subset of intra prediction modes and a third subset of intra prediction modes, wherein said third subset of intra prediction modes is different from said second subset of intra prediction modes.

8. The method of claim 7, or the apparatus of claim 7, wherein said first subset of intra prediction modes includes at least one of DC and planar modes.

9. The method of any one of claims 1, 2 and 5-8, or the apparatus of any one of claims 3-8, wherein said first sub-block has a same size and shape as said second sub-block.

10. The method of any one of claims 1, 2 and 5-9, or the apparatus of any one of claims 3-9, wherein said block is split horizontally or vertically into said first sub-block and said second sub-block.

11. The method of any one of claims 1, 2 and 5-10, or the apparatus of any one of claims 3-10, wherein said first sub-block is determined to use said first set of available intra prediction modes based on a depth of binary tree partition associated with said first sub-block.

12. The method of any one of claims 1, 2 and 5-11, or the apparatus of any one of claims 3-11, said first sub-block being a left half of said block and said second sub-block being a right half of said block, wherein said second subset of intra prediction modes excludes directional intra prediction modes pointing leftward, and wherein said third subset of intra prediction modes excludes directional intra prediction modes pointing rightward.

13. The method of any one of claims 1, 2 and 5-11, or the apparatus of any one of claims 3-11, said first sub-block being an upper half of said block and said second sub-block being a bottom half of said block, wherein said second subset of intra prediction modes excludes directional intra prediction modes pointing upward, and wherein said third subset of intra prediction modes excludes directional intra prediction modes pointing downward.

14. A video signal, formatted to include:
encoding of a first intra prediction mode selected from a first set of available intra prediction modes for a first sub-block of a block of a picture;
encoding of a second intra prediction mode selected from a second set of available intra prediction modes for a second sub-block, wherein said first set of available intra prediction modes is different from said second set of available intra prediction modes;
said first sub-block encoded using said first intra prediction mode; and
said second sub-block encoded using said second intra prediction mode.

15. A computer program comprising software code instructions for performing the method according to any one of claims 1, 2 and 5-13, when the computer program is executed by one or more processors.
